# EUROPÄISCHE PATENTSCHRIFT

(11) **EP 1 762 488 B1**
(45) Veröffentlichungstag und Bekanntmachung des Hinweises auf die Patenterteilung: **04.02.2009**
(21) Anmeldenummer: 06010594.7
(22) Anmeldetag: 23.05.2006
(51) Int. Cl.: B64D 11/06

(54) **Sitzsystem mit Tischelement für Fahrzeuge zur Personenbeförderung, insbesondere für Luftfahrzeuge**
Seat system with table unit for passenger transport vehicles, in particular for aircraft
Système de siège avec une unité de tablette pour véhicules de transport de personnes, en particulier pour aéronefs

(30) Priorität: 07.09.2005 DE 102005042377
(43) Veröffentlichungstag der Anmeldung: 14.03.2007
(73) Patentinhaber: Recaro Aircraft Seating GmbH & Co. KG, 74523 Schwäbisch Hall (DE)
(72) Erfinder: Baumann, Jürgen, 78351 Ludwigshafen (DE)
(74) Vertreter: Daub, Thomas

(56) Entgegenhaltungen:
- EP-A- 0 335 018
- US-A- 3 877 747
- US-A- 4 536 027
- US-A- 5 842 743

## Beschreibung

Die Erfindung bezieht sich auf ein Sitzsystem für Fahrzeuge zur Personenbeförderung, insbesondere für Luftfahrzeuge, mit Sitzkomponenten wie beispielsweise Sitzstruktur, Sitzteil, Rückenlehne, Armlehne und Tischelement, wobei dieses zwischen einer am Anlehnbereich der Rückenlehne gelegenen Verstaustellung und einer vom Anlehnbereich entfernten Gebrauchsstellung bewegbar ist, in der es eine zumindest näherungsweise horizontale Tischfläche bildet.

Bekanntlich werden in Fahrzeugen zur Personenbeförderung, wie Luftfahrzeugen oder Fährschiffen, den Passagieren unterschiedliche Komfortklassen in entsprechend unterschiedlichen Fahrpreiskategorien angeboten. Dabei werden den Fahr- oder Fluggästen unterschiedlich gestaltete Sitze zur Verfügung gestellt, wobei bei den in der Luftfahrt üblichen Kategorien wie First-Class, Business-Class und Economy-Class sich insbesondere die Breite des jeweils zur Verfügung gestellten Sitzbereiches unterscheidet.

Es ist auch Stand der Technik, Sitzsysteme für derartige Einsatzzwecke so auszubilden, dass die Möglichkeit besteht, bei Sitzreihen mit mehreren nebeneinander liegenden Sitzen eine Umrüstung zur Anpassung an unterschiedliche Komfortklassen vorzunehmen. Beispielsweise offenbart die EP 0 335 018 B1 ein Sitzsystem der eingangs genannten Art, das in der Weise umrüstbar ist, dass nach Wunsch eine Sitzreihe mit drei nebeneinander liegenden Sitzen (beispielsweise für Economy-Class) oder eine Sitzreihe mit zwei Sitzen zur Verfügung steht, wobei im letzteren Fall die Breite des Sitzbereiches jeweils vergrößert ist und ein Tischelement in eine Gebrauchsstellung gebracht werden kann, in der es den Zwischenraum überspannt, der trotz der Vergrößerung der Sitzbereichsbreite zwischen den Sitzen verblieben ist.

Die bekannte Lösung weist Nachteile auf. Um die Sitzbreite der Sitze zu vergrößern, werden deren jeweils innenliegende Armlehnen jeweils um eine gewisse Strecke gegeneinander verfahren und bilden in der entsprechenden Position die Lagerung für das in der Gebrauchsstellung auf ihnen aufliegende Tischelement. Die Gebrauchseigenschaften der bekannten Lösung lassen zu wünschen übrig. Um das Tischelement, das in der Verstaustellung ein Teil-Polsterelement der Rückenlehne bildet, in die Gebrauchsstellung zu bringen, muss das Tischelement aus der Hauptpolsterung der Rückenlehne manuell herausgenommen und von der Rückenlehne, mit der es gelenkig verbunden ist, nach unten geschwenkt werden, bis es auf den Armlehnen aufliegt. Da bei derartigen Sitzsystemen normalerweise eine Neigungseinstellung der Rückenlehne vorgesehen ist, ist die richtige Auflage auf den Armlehnen nur bei bestimmten Einstellpositionen der Rückenlehne gewährleistet.

Aus der US 3,877,747 ist ein Sitzsystem mit einer Sitzstruktur, einer Rückenlehne und einem klappbaren Tischelement bekannt. Das Tischelement ist mit der Sitzstruktur über ein Hebelgetriebe schwenkbar verbunden.

Im Hinblick auf diesen Stand der Technik stellt sich die Erfindung die Aufgabe, ein Sitzsystem der betrachteten Art zur Verfügung zu stellen, das sich durch vergleichsweise bessere Gebrauchseigenschaften auszeichnet.

Erfindungsgemäß ist diese Aufgabe durch ein Sitzsystem gelöst, das die Merkmale des Patentanspruches 1 in seiner Gesamtheit aufweist.

Die erfindungsgemäße Lösung zeichnet sich durch eine besondere Benutzerfreundlichkeit aus, weil durch das Vorhandensein eines Kraftantriebes, der mit dem Hebelgetriebe gekoppelt ist, praktisch eine Servoeinrichtung zur Verfügung steht, die den Sitzbenutzer beim Überführen des Tischelementes aus der Verstaustellung in die Gebrauchsstellung unterstützt. Es ist zu diesem Zweck lediglich erforderlich, dass der Sitzbenutzer eine Entriegelung des in der Verstaustellung befindlichen Tischelementes durchführt, indem er beispielsweise einen Steuerknopf einer Verriegelung betätigt, wonach der Kraftantrieb das Tischelement selbsttätig in eine Zwischenstellung von dem Rückenlehnenbereich abspreizt. Da der Kraftantrieb mit dem Hebelgetriebe unter Bildung einer Überzenterung gekoppelt ist, ist die Position des Tischelementes in der Zwischenstellung definiert. Der Sitzbenutzer braucht nun lediglich am Tischelement eine die Überzenterung überwindende Betätigungskraft aufbringen, wonach der Kraftantrieb das Tischelement wiederum selbsttätig in die Gebrauchsstellung bringt.

Bei bevorzugten Ausführungsbeispielen ist zwischen Hebelgetriebe und Sitzstruktur eine Anschlageinrichtung vorhanden, die das Hebelgetriebe bei Erreichen der Gebrauchsstellung gegen die durch den Kraftantrieb erzeugte Stellkraft blockiert und damit das Tischelement in der Gebrauchsstellung gegenüber der Sitzstruktur abstützt. Im Gegensatz zu der erwähnten bekannten Lösung ist daher keine Lagerung des Tischelementes durch die angrenzenden Armlehnen erforderlich, d. h. die Armlehnen bleiben für den Sitzbenutzer ohne jegliche Einschränkung nutzbar, selbst wenn sich das Tischelement in der Gebrauchsstellung befindet.

Bei vorteilhaften Ausführungsbeispielen ist das Hebelgetriebe durch ein Hebelpaar gebildet, das zwei Hebel aufweist, deren eines Ende jeweils an einer an der Sitzstruktur festgelegten, in Sitzquerrichtung verlaufenden Schwenkachse schwenkbar gelagert ist und deren andere Enden am Tischelement an Gelenkstellen angelenkt sind, die, bezogen auf die Längserstreckung der Tischfläche, in einem Abstand voneinander angeordnet sind.

Als dem Hebelgetriebe zugeordneter Kraftantrieb kann ein Linearantrieb vorgesehen sein, der eine zwischen Sitzstruktur und Tischelement wirkende Druckkraft erzeugt und der für das Einleiten der Druckkraft am Tischelement an einer Anlenkstelle gelenkig angreift, die zwischen den Gelenkstellen der Hebel gelegen ist. Bei solcher Lagebeziehung zwischen den Gelenkstellen der Hebel und der Anlenkstelle, an der die Druckkraft des Linearantriebes wirksam ist, läßt sich die Kinematik so gestalten, dass das durch den Kraftantrieb bewirkte Schwenkmoment am Tischelement die Wirkungsrichtung umkehrt, wenn das Tischelement über die einer Überzenterung entsprechende Zwischenstellung gegen die Gebrauchsstellung hin oder in Richtung auf die Verstaustellung hin bewegt wird.

Vorzugsweise ist als Kraftantrieb ein Federelement, vorzugsweise eine Gasdruckfeder, vorgesehen, wobei die Gasdruckfeder an der Sitzstruktur an der beiden Hebel gemeinsamen Schwenkachse gelenkig abgestützt ist.

Bei einer besonders kompakten und vorteilhaften Ausbildung des Hebelgetriebes ist die Anordnung so getroffen, dass derjenige der beiden Hebel, der am Tischelement an der dem Zentralbereich der Tischfläche näher gelegenen ersten Gelenkstelle angreift, als Abstützhebel vorgesehen ist, der einen festen Achsabstand zwischen dieser Gelenkstelle und der Schwenkachse an der Sitzstruktur definiert, während der andere Hebel als Führungshebel vorgesehen ist, der am von der Sitzstruktur entfernten Ende einen in Längsrichtung des Hebels verlaufenden Führungsschlitz aufweist, in dem ein die zweite Gelenkstelle am Tischelement bildender Gelenkzapfen verschiebbar geführt ist.

Bei einem Ausführungsbeispiel, das sich durch hohe Strukturfestigkeit bei gleichzeitig besonders kompakter Bauweise auszeichnet, weist der Führungshebel die Form eines Doppelhebels mit zwei in einem Abstand voneinander zueinander parallel verlaufenden Wangen auf, die auf einem Teil ihrer Länge zur Bildung eines U-Profiles über einen Steg miteinander verbunden sind, wobei zwischen beiden Wangen, die jede mit einem Führungsschlitz versehen sind, im Innenraum des U-Profiles eine Tischträgerplatte des Tischelementes geführt ist, an der die Gelenkstellen der Hebel und die Anlenkstelle des Kraftantriebes vorgesehen sind, wobei sich von der Tischträgerplatte beidseits je ein die zweite Gelenkstelle bildender Gelenkzapfen in den betreffenden Führungsschlitz erstreckt.

Hierbei kann die als Federelement vorgesehene Gasdruckfeder im Innenraum des vom Doppelhebel gebildeten U-Profiles an der Schwenkachse an der Sitzstruktur angelenkt sein. Dies führt zu einer besonders raumsparenden Bauweise des Hebelgetriebes.

Vorzugsweise sind am Tischelement beidseits je eine Tischträgerplatte vorgesehen, an deren jeder ein Hebelgetriebe angreift.

Die Anschlageinrichtung, die die Gebrauchsstellung des Tischelementes definiert und dieses in der Gebrauchsstellung abstützt, kann in der Weise ausgebildet sein, dass der jeweilige Doppelhebel an dem den Führungsschlitzen entgegengesetzten Ende einen über den Bereich der Schwenkachse hinaus verlängerten, ein Teil der Anschlageinrichtung bildenden Fortsatz aufweist, der bei der Gebrauchsstellung des Tischelementes an einem Anschlagkörper der Sitzstruktur anliegt, so dass die Schwenkbewegung des Hebelgetriebes bei Erreichen der Gebrauchsstellung blockiert wird.

Wie bereits erwähnt, ist dadurch, dass das Tischelement nicht an der Rükkenlehne, sondern über das oder die Hebelgetriebe unmittelbar mit der Sitzstruktur getrieblich verbunden ist, das Tischelement gegenüber Bewegungen der Rückenlehne, die zu deren Neigungseinstellung erfolgen, vollständig entkoppelt. Die Anordnung kann jedoch so getroffen sein, dass die Schwenkachse, auf der das betreffende Hebelgetriebe an der Sitzstruktur angelenkt ist, zu der Neigungsachse fluchtend gelegen ist, die für die Neigungseinstellung der Rückenlehne vorgesehen ist.

Nachstehend ist die Erfindung anhand eines in der Zeichnung dargestellten Ausführungsbeispieles im einzelnen erläutert. Es zeigen:
- Fig. 1 eine perspektivische Schrägansicht, in der lediglich einige für das Verständnis der Erfindung wesentliche Strukturelemente des mittleren Sitzbereiches einer Sitzreihe mit drei nebeneinander liegenden Sitzen gemäß einem Ausführungsbeispiel des erfindungsgemäßen Sitzsystemes gezeigt sind, wobei ein Tischelement in seiner Gebrauchsstellung dargestellt und ein Hebelgetriebe unvollständig gezeigt sind;
- Fig. 2 eine schematisierte Seitenansicht der Strukturelemente von Fig. 1, wobei das Tischelement in einer gegenüber seiner Verstaustellung leicht abgeklappten Zwischenstellung dargestellt ist, und
- Fig. 3 eine gegenüber Fig. 1 und 2 in etwas größerem Maßstab gezeichnete perspektivische Schrägansicht, in der im Unterschied zu Fig. 1 das Hebelgetriebe vervollständigt dargestellt ist.

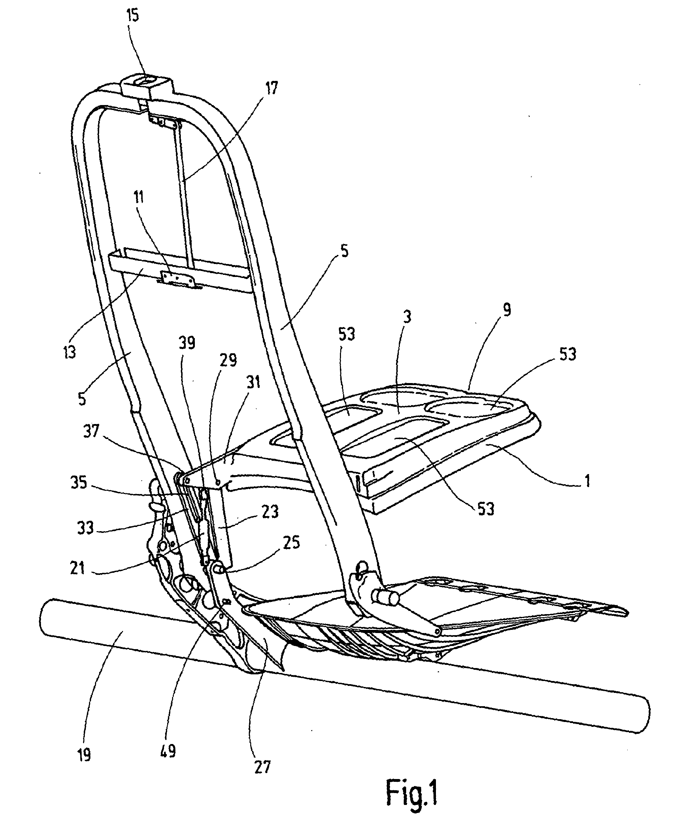

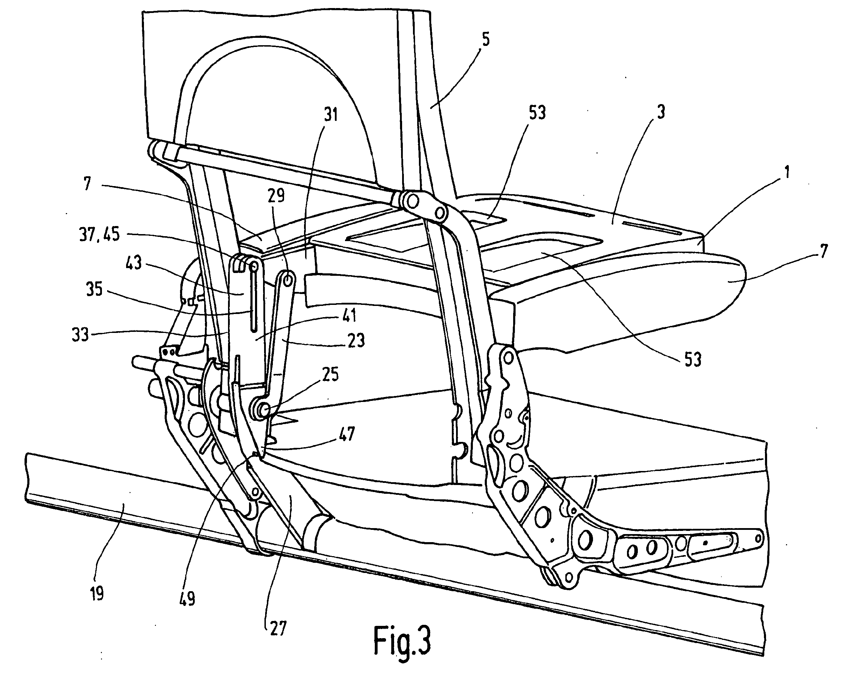

In den Fig. 1 und 3 ist ein Tischelement 1 jeweils in seiner Gebrauchsstellung dargestellt, in der es mit einer seiner Großflächen eine annähernd horizontale (bezogen auf die normale Einbaulage des Sitzsystems) Tischfläche 3 bildet. Diese erstreckt sich, vom Bereich einer Rückenlehne, von der lediglich das Lehnengestell mit Holmen 5 dargestellt ist, zwischen Armlehnen 7 (Fig. 3) in Reiserichtung (Flugrichtung) nach vorn, wobei die Längserstrekkung der Tischfläche 3 beim gezeigten Beispiel bis zum vorderen Endbereich der Armlehnen 7 reicht. Aus der in Fig. 1 und 3 gezeigten Gebrauchsstellung ist das Tischelement 1 in eine Verstaustellung überführbar, in der es zwischen den Holmen 5 der Rückenlehne liegend, mit seiner der Tischfläche 3 entgegengesetzten Großfläche, die als Polsterfläche ausgebildet ist, einen Teil des Anlehnbereiches der Rückenlehne bildet.

In dieser in den Fig. nicht gezeigten Verstaustellung ist ein (nicht gezeigtes) Riegelelement, das sich am Endrand 9 (Fig. 1) des Tischelementes 1 befindet, im Riegeleingriff mit einer steuerbaren Verriegelungseinrichtung 11 an einem Quersteg 13 der Holme 5. Die Verriegelungseinrichtung 11 ist durch Betätigen eines Auslöseknopfes 15 entriegelbar, der an der Oberseite der Rückenlehne für den Sitzbenutzer zugänglich und über eine Steuerstange 17 mit der Verriegelungseinrichtung 11 gekuppelt ist.

Für seine Einstellbewegungen zwischen der nicht dargestellten Verstaustellung und der Gebrauchsstellung ist das Tischelement 1 mit der festen Sitzstruktur 19 über ein Hebelgetriebe gekoppelt, das aus einem aus zwei Gelenkhebeln bestehenden Hebelpaar gebildet ist und dem ein Kraftantrieb zugeordnet ist, genauer gesagt ein Linearantrieb in Form einer Gasdruckfeder 21. Der eine Hebel des das Hebelgetriebe bildenden Hebelpaares ist ein Abstützhebel 23 der am einen Ende auf einer Schwenkachse 25 schwenkbar gelagert ist, die an einem feststehenden Strukturelement 27 der Sitzstruktur 19 vorgesehen ist. Mit seinem anderen Ende ist der Abstützhebel 23 an einer Gelenkstelle 29 an einer Tischträgerplatte 31 des Tischelementes 1 angelenkt. Während der Abstützhebel 23 einen festen Achsabstand zwischen der strukturfesten Schwenkachse 25 und der Gelenkstelle 29 an der Tischträgerplatte 31 definiert, hat der zweite Hebel des das Hebelgetriebe bildenden Hebelpaares die Form eines Führungshebels 33, der mit einem Ende auf der strukturfesten Schwenkachse 25 schwenkbar gelagert ist, an seinem entgegengesetzten Endbereich jedoch keine festgelegte Schwenkstelle bildet, sondern einen in Hebellängsrichtung verlaufenden Führungsschlitz 35 aufweist, der mit einer Gelenkstelle 37 an der Tischträgerplatte 31 des Tischelementes 1 eine Stift-Schlitz-Verbindung bildet.

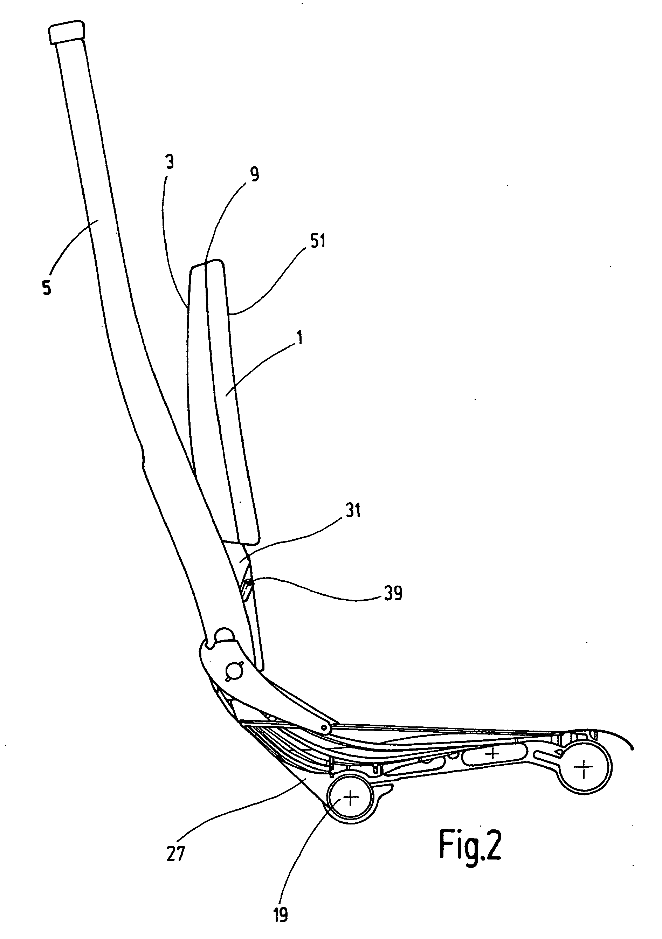

Wie aus Fig. 1 und 2 erkennbar ist, greift die Gasdruckfeder 21, die mit ihrem strukturseitigen Ende auf der strukturfesten Schwenkachse 25 gelenkig gelagert ist, mit ihrer Druckstange an einer Anlenkstelle 39 an der Tischträgerplatte 31 an, wobei diese Anlenkstelle 39 zwischen den Gelenkstellen 29 und 37 für die Verbindung mit den Hebeln 23 bzw. 33 gelegen ist.

Wie erwähnt, ist das Hebelgetriebe in Fig. 1 unvollständig dargestellt. Um durch Vereinfachung der zeichnerischen Darstellung das Verständnis zu erleichtern, ist in Fig. 1 nämlich von dem als Doppelhebel mit zwei parallelen Seitenwangen ausgebildeten Führungshebel 33 lediglich die eine der zwei Seitenwangen 41 dargestellt, um die Gasdruckfeder 21 sichtbar zu machen, die sich auf einem Teil ihrer Länge zwischen den Seitenwangen 41 des Führungshebels 33 erstreckt, welcher auf einem Teil seiner Länge ein teilweise geschlossenes U-Profil bildet, da die Seitenwangen 41 auf einem Teillängenbereich des Führungshebels 33 durch einen Steg 43 miteinander verbunden sind. Jede der Seitenwangen 41 ist mit einem Führungsschlitz 35 versehen, in deren jedem ein Gelenkzapfen 45 geführt ist, die sich beidseits von der Tischträgerplatte 31 erstrecken, die im Bereich der Gelenkstelle 37 ebenfalls zwischen den Seitenwangen 41 des Führungshebels 33 geführt ist.

Wie lediglich in Fig. 3 dargestellt ist, sind die Seitenwangen 41 des Führungshebels 33 über die Schwenkachse 25 hinaus verlängert, so dass ein Fortsatz 47 gebildet wird, der bei der Gebrauchsstellung des Tischelementes 1 an einem Anschlagkörper 49 am festen Strukturelement 27 anliegt, siehe Fig. 3. Durch die so begrenzte Schwenkbewegung des Führungshebels 33 und dadurch, dass die Gelenkzapfen 45 der Tischträgerplatte 31 bei der Gebrauchsstellung am oberen Ende des Führungsschlitzes 35 anliegen sowie durch die Abstützung des Tischelementes 1 über den Abstützhebel 23 an der Schwenkachse 25 ist die Gebrauchsstellung des Tischelementes 1 in der Gebrauchsstellung formschlüssig definiert.

Wird das Tischelement 1 aus der Gebrauchsstellung gegen das von der Gasdruckfeder 21 erzeugte Schwenkmoment nach oben geschwenkt, erreicht das Hebelgetriebe, wenn die in Fig. 2 gezeigte Zwischenstellung erreicht ist, den Zustand der Überzenterung, so dass kein weiteres Schwenkmoment am Tischelement 1 wirkt. Wird das Tischelement 1 aus dieser Zwischenstellung (Fig. 2) weiter gegen die Rückenlehne hin bewegt, so dass die Überzenterung des Hebelgetriebes überwunden ist, ergibt sich am Tischelement 1 erneut ein von der Gasdruckfeder 21 erzeugtes Schwenkmoment, das bei der Darstellung von Fig. 2 im Uhrzeigersinn wirkt. Das Tischelement 1 kann nun gegen dieses Schwenkmoment vollständig in die Verstaustellung gedrückt werden, in der das am Endrand 9 des Tischelementes 1 befindliche Verriegelungselement durch die Verriegelungseinrichtung 11 festgelegt wird. In dieser Gebrauchsstellung kann das Tischelement 1 einen Teil des Anlehnbereichs der Rückenlehne bilden. Das Tischelement 1 weist zu diesem Zweck auf der der Tischfläche 3 entgegengesetzten Seite eine Polsterfläche 51 auf, siehe Fig. 2.

Wie Fig. 1 und 3 zeigen, kann die Tischfläche 3 mit muldenartigen Vertiefungen 53 versehen sein, so dass definierte Stellflächen für Getränke und dergleichen gebildet werden.

## Patentansprüche

1. Sitzsystem für Fahrzeuge zur Personenbeförderung, insbesondere für Luftfahrzeuge, mit einer Sitzstruktur (19, 27), einer Rückenlehne (5) und einem Tischelement (1), wobei dieses zwischen einer am Anlehnbereich der Rückenlehne (5) gelegenen Verstaustellung und einer vom Anlehnbereich entfernten Gebrauchsstellung bewegbar ist, in der es eine zumindest nährungsweise horizontale Tischfläche (3) bildet, wobei das Tischelement (1) mit der Sitzstruktur (19, 27) über ein Hebelgetriebe (23, 33) schwenkbar verbunden ist, **dadurch gekennzeichnet, dass** ein Kraftantrieb (21) vorgesehen ist, der mit dem Hebelgetriebe (23, 33) unter Bildung einer Überzenterung derart gekoppelt ist, dass der Kraftantrieb (21) das Tischelement aus der Verstaustellung in eine durch die Überzenterung definierte Zwischenstellung und aus dieser in die Gebrauchsstellung zu schwenken sucht, nachdem die Überzenterung der Zwischenstellung durch Aufbringen einer Kraft auf das Tischelement (1) überwunden ist.

2. Sitzsystem nach Anspruch 1, **dadurch gekennzeichnet, dass** zwischen Hebelgetriebe (23, 33) und Sitzstruktur (19, 27) eine Anschlageinrichtung (47, 49) vorhanden ist, die das Hebelgetriebe (23, 33) bei Erreichen der Gebrauchsstellung gegen die durch den Kraftantrieb (21) erzeugte Stellkraft blockiert und damit das Tischelement (1) in der Gebrauchsstellung gegenüber der Sitzstruktur (19, 27) abstützt.

3. Sitzsystem nach Anspruch 2, **dadurch gekennzeichnet, dass** das Hebelgetriebe zwei Hebel (23, 33) aufweist, deren eines Ende jeweils an einer an der Sitzstruktur (19, 27) festgelegten, in Sitzquerrichtung verlaufenden Schwenkachse (25) schwenkbar gelagert ist und deren andere Enden am Tischelement (1) an Gelenkstellen (29, 37) angelenkt sind, die, bezogen auf die Längserstreckung der Tischfläche (3), in einem Abstand voneinander angeordnet sind.

4. Sitzsystem nach Anspruch 3, **dadurch gekennzeichnet, dass** als Kraftantrieb ein Linearantrieb (21) zur Erzeugung einer zwischen Sitzstruktur (19, 27) und Tischelement (1) wirkenden Druckkraft vorhanden ist, der für das Einleiten der Druckkraft am Tischelement (1) an einer Anlenkstelle (39) gelenkig angreift, die zwischen den Gelenkstellen (29, 37) der Hebel (23 bzw. 33) gelegen ist.

5. Sitzsystem nach Anspruch 4, **dadurch gekennzeichnet, dass** als Kraftantrieb ein Federelement, vorzugsweise eine Gasdruckfeder (21), vorgesehen ist, das sich an der Sitzstruktur (19, 27) an der beiden Hebeln (23, 33) gemeinsamen Schwenkachse (25) gelenkig abstützt.

6. Sitzsystem nach Anspruch 5, **dadurch gekennzeichnet, dass** derjenige der beiden Hebel, der am Tischelement an der dem Zentralbereich der Tischfläche näher gelegenen ersten Gelenkstelle (29) angreift, als Abstützhebel (23) vorgesehen ist, der einen festen Achsabstand zwischen dieser Gelenkstelle (29) und der Schwenkachse (25) an der Sitzstruktur (19, 27) definiert, und dass der andere Hebel als Führungshebel (33) vorgesehen ist und am von der Sitzstruktur (19, 27) entfernten Ende einen in Längsrichtung des Hebels (33) verlaufenden Führungsschlitz (35) aufweist, in dem ein die zweite Gelenkstelle (37) am Tischelement (1) bildender Gelenkzapfen (45) verschiebbar geführt ist.

7. Sitzsystem nach Anspruch 6, **dadurch gekennzeichnet, dass** der Führungshebel (33) die Form eines Doppelhebels mit zwei in einem Abstand voneinander, zueinander parallel verlaufenden Wangen (41) aufweist, die auf einem Teil ihrer Länge zur Bildung eines U-Profiles über einen Steg (43) miteinander verbunden sind, und dass zwischen beiden Wangen (41), die jede mit einem Führungsschlitz (35) versehen sind, im Innenraum des U-Profiles eine Tischträgerplatte (31) des Tischelementes (1) geführt ist, an der die Gelenkstellen (29, 37) der Hebel (23, 33) und die Anlenkstelle (39) der Gasfeder (21) vorgesehen sind und von der sich beidseits je ein die zweite Gelenkstelle (37) bildender Gelenkzapfen (45) in den betreffenden Führungsschlitz (35) erstreckt.

8. Sitzsystem nach Anspruch 7, **dadurch gekennzeichnet, dass** die als Federelement vorgesehene Gasdruckfeder (21) im Innenraum des vom Führungshebel (33) gebildeten U-Profils an der Schwenkachse (25) an der Sitzstruktur (19, 27) angelenkt ist.

9. Sitzsystem nach Anspruch 8, **dadurch gekennzeichnet, dass** der Führungshebel (33) an dem den Führungsschlitzen (35) entgegengesetzten Ende einen über den Bereich der Schwenkachse (25) hinaus verlängerten, ein Teil der Anschlageinrichtung bildenden Fortsatz (47) aufweist, der bei der Gebrauchsstellung des Tischelementes (1) an einem Anschlagkörper (49) der Sitzstruktur (19, 27) anliegt, um die Schwenkbewegung des Hebelgetriebes bei Erreichen der Gebrauchsstellung zu blockieren.

10. Sitzsystem nach einem der Ansprüche 1 bis 9, **dadurch gekennzeichnet, dass** die Rückenlehne (5) für eine Neigungseinstellung ihrer Anlehnfläche an der Sitzstruktur (19, 27) um eine Neigungsachse schwenkbar gelagert ist und dass die Schwenkachse (25) des Hebelgetriebes mit der Neigungsachse der Rückenlehne (5) fluchtet.

11. Sitzsystem nach einem der Ansprüche 1 bis 10, **dadurch gekennzeichnet, dass** eine vom Sitzbenutzer steuerbare Verriegelungseinrichtung (11) vorhanden ist, mit der das Tischelement (1) wahlweise in der Verstaustellung gegen die Wirkung des Kraftantriebes (21) verriegelbar oder für das durch den Kraftantrieb (21) bewirkte Überführen in die Zwischenstellung freigebbar ist.

## Claims

1. Seat system for passenger transport vehicles, in particular for aircraft, having a seat structure (19, 27), a backrest (5) and a table element (1), it being possible for the said table element (1) to be moved between a stowed position which is situated on the leaning region of the backrest (5) and a use position which is remote from the leaning region and in which it forms an at least approximately horizontal table face (3), the table element (1) being connected pivotably to the seat structure (19, 27) via a lever mechanism (23, 33), **characterized in that** a mechanical drive (21) is provided which is coupled to the lever mechanism (23, 33) with the formation of an over-centring action in such a way that the mechanical drive (21) attempts to pivot the table element from the stowed position into an intermediate position which is defined by the over-centring action, and from the latter into the use position, after the over-centring action of the intermediate position is overcome by applying a force to the table element (1).

2. Seat system according to Claim 1, **characterized in that** there is a stop device (47, 49) between the lever mechanism (23, 33) and the seat structure (19, 27), which stop device (47, 49) locks the lever mechanism (23, 33) against the adjusting force which is produced by the mechanical drive (21), when the use position has been reached, and thereby supports the table element (1) in the use position with respect to the seat structure (19, 27).

3. Seat system according to Claim 2, **characterized in that** the lever mechanism has two levers (23, 33), one end of which is mounted pivotably in each case on a pivot pin (25) which is fixed on the seat structure (19, 27) and extends in the seat transverse direction, and the other ends of which are articulated on the table element (1) at joint points (29, 37) which are arranged at a spacing from one another in relation to the longitudinal extent of the table face (3).

4. Seat system according to Claim 3, **characterized in that** there is a linear drive (21) as mechanical drive for generating a pressure force which acts between the seat structure (19, 27) and the table element (1), which linear drive (21) acts in an articulated manner on the table element (1) at an articulation point (39) which lies between the joint points (29, 37) of the levers (23 and 33) in order to introduce the pressure force.

5. Seat system according to Claim 4, **characterized in that** a spring element, preferably a gas-pressure spring (21), is provided as mechanical drive, which spring element is supported in an articulated manner on the seat structure (19, 27) on the pivot pin (25) which is common to both levers (23, 33).

6. Seat system according to Claim 5, **characterized in that that** the one of the two levers which acts on the table element on the first joint point (29) which lies closer to the central region of the table face is provided as a supporting lever (23) which defines a fixed axial distance between this joint point (29) and the pivot pin (25) on the seat structure (19, 27), and **in that** the other lever is provided as a guide lever (33) and, at the end which is remote from the seat structure (19, 27), has a guide slot (35) which extends in the longitudinal direction of the lever (33) and in which a pivot (45) is guided displaceably which forms the second joint point (37) on the table element (1).

7. Seat system according to Claim 6, **characterized in that** the guide lever (33) has the form of a double lever with two cheeks (41) which extend parallel to one another and at a spacing from one another and are connected to one another via a web (43) on a part of their length in order to form a U profile, and **in that** a table carrier plate (31) of the table element (1) is guided in the interior of the U profile between the two cheeks (41) which are each provided with a guide slot (35), on which table carrier plate (31) the joint points (29, 37) of the levers (23, 33) and the articulation point (39) of the gas spring (21) are provided, and from which table carrier plate (31) on both sides in each case one pivot (45) which forms the second joint point (37) extends into the relevant guide slot (35).

8. Seat system according to Claim 7, **characterized in that** the gas-pressure spring (21) which is provided as spring element is articulated on the seat structure (19, 27) on the pivot pin (25) in the interior of the U profile which is formed by the guide lever (33).

9. Seat system according to Claim 8, **characterized in that** the guide lever (33) has, at the end which lies opposite the guide slots (35), a projection (47) which is extended beyond the region of the pivot pin (25), forms a part of the stop device and, in the use position of the table element (1), bears against a stop element (49) of the seat structure (19, 27), in order to block the pivoting movement of the lever mechanism when the use position has been reached.

10. Seat system according to one of Claims 1 to 9, **characterized in that** the backrest (5) is mounted on the seat structure (19, 27) such that it can be pivoted about an inclination axis in order to set the inclination of its leaning face, and **in that** the pivot pin (25) of the lever mechanism is aligned with the inclination axis of the backrest (5).

11. Seat system according to one of Claims 1 to 10, **characterized in that** there is a locking device (11) which can be controlled by the seat user and by way of which the table element (1) can optionally be locked in the stowed position counter to the action of the mechanical drive (21) or can be released for transfer into the intermediate position brought about by the mechanical drive (21).

## Revendications

1. Système de siège pour véhicules de transport de personnes, en particulier pour aéronefs, qui présente une structure de siège (19, 27), un dossier (5) et un élément de table (1), ce dernier pouvant être déplacé entre une position de rangement située dans la zone du dossier (5) et une position d'utilisation éloignée de la zone du dossier et dans laquelle cet élément de table forme une surface de table (3) au moins approximativement horizontale, l'élément de table (1) étant relié à pivotement à la structure de siège (19, 27) par une transmission à leviers (23, 33),
**caractérisé en ce que**
le système présente un entraînement mécanique (21) accouplé à la transmission à leviers (23, 33) en formant un sur-centrage de telle sorte que l'entraînement mécanique (21) cherche à incliner l'élément de table depuis la position de rangement jusque dans une position intermédiaire définie par le sur-centrage et de cette dernière jusque dans la position d'utilisation, suite à quoi le sur-centrage de la position intermédiaire est surmonté par application d'une force sur l'élément de table (1).

2. Système de siège selon la revendication 1, **caractérisé en ce qu'**entre la transmission à leviers (23, 33) et la structure de siège (19, 27) est prévu un dispositif de butée (47, 49) qui bloque la transmission à leviers (23, 33) en opposition à la force de déplacement exercée par l'entraînement mécanique (21) lorsque la position d'utilisation est atteinte, l'élément de table (1) s'appuyant ainsi contre la structure de siège (19, 27) lorsqu'il est en position d'utilisation.

3. Système de siège selon la revendication 2, **caractérisé en ce que** la transmission à leviers présente deux leviers (23, 33) dont une extrémité est montée de manière à pouvoir pivoter sur un axe de pivotement (25) qui s'étend dans la direction transversale du siège et qui est fixé sur la structure de siège (19, 27), et dont les autres extrémités sont articulées sur l'élément de table (1) par des emplacements d'articulation (29, 37) qui sont disposés à distance l'un de l'autre par rapport à l'extension longitudinale de la surface de table (3).

4. Système de siège selon la revendication 3, **caractérisé en ce que** comme entraînement mécanique est prévu un entraînement linéaire (21) qui exerce une force de poussée qui agit entre la structure de siège (19, 27) et l'élément de table (1) et qui, pour appliquer la force de poussée sur l'élément de table (1), s'engage de manière articulée sur un emplacement d'articulation (39) situé entre les emplacements d'articulation (29, 37) des leviers (23 et 33).

5. Système de siège selon la revendication 4, **caractérisé en ce que** comme entraînement mécanique est prévu un élément élastique, de préférence un ressort (21) à pression de gaz, qui s'appuie de manière articulée sur la structure de siège (19, 27) par un axe de pivotement (25) commun aux deux leviers (23, 33).

6. Système de siège selon la revendication 5, **caractérisé en ce que** celui des deux leviers qui s'engage sur l'élément de table par le premier emplacement articulé (29) situé le plus près de la partie centrale de la surface de table est prévu comme levier d'appui (23) qui définit une distance axiale fixe entre cet emplacement articulé (29) et l'axe de pivotement (25) sur la structure de siège (19, 27) et **en ce que** l'autre levier est prévu comme levier de guidage (33) et présente à son extrémité éloignée de la structure de siège (19, 27) une fente de guidage (35) qui s'étend dans le sens de la longueur du levier (33) et dans laquelle un tourillon d'articulation (45) qui forme le deuxième emplacement articulé (37) de l'élément de table (1) est guidé de manière à pouvoir coulisser.

7. Système de siège selon la revendication 6, **caractérisé en ce que** le levier de guidage (33) présente la forme d'un double levier qui présente deux branches (41) parallèles l'une à l'autre et situées à distance l'une de l'autre, reliées l'une à l'autre par une traverse (43) sur une partie de leur longueur de manière à former un profilé en U, et **en ce qu'**une plaque (31) de support de table de l'élément de table (1) est guidée dans l'espace intérieur du profilé en U entre les deux branches (41), qui sont toutes deux dotées d'une fente de guidage (35), les emplacements articulés (29, 37) des leviers (23, 33) et l'emplacement d'articulation (39) du ressort à gaz (21) étant prévus sur cette plaque de support de table, un tourillon d'articulation (45) qui forme de chaque côté le deuxième emplacement articulé (37) s'étendant depuis cette plaque de support de table jusque dans la fente de guidage (35) correspondante.

8. Système de siège selon la revendication 7, **caractérisé en ce que** le ressort (21) à pression de gaz prévu comme élément de ressort est articulé sur l'axe de pivotement (25) de la structure de siège (19, 27) dans l'espace intérieur du profilé en U formé par le levier de guidage (33).

9. Système de siège selon la revendication 8, **caractérisé en ce que** sur son extrémité opposée à la fente de guidage (35), le levier de guidage (33) présente un prolongement (47) qui forme une partie du dispositif de butée et se prolonge au-delà de la zone occupée par l'axe de pivotement (25) et qui, lorsque l'élément de table (1) est en position d'utilisation, repose contre un corps de butée (49) de la structure de siège (19, 27) pour bloquer le déplacement de pivotement de la transmission à leviers lorsque la position d'utilisation est atteinte.

10. Système de siège selon l'une des revendications 1 à 9, **caractérisé en ce que** le dossier (5) est monté à pivotement autour d'un axe d'inclinaison pour permettre de régler l'inclinaison de sa surface d'appui sur la structure de siège (19, 27) et **en ce que** l'axe de pivotement (25) de la transmission à levier est alignée sur l'axe d'inclinaison du dossier (5).

11. Système de siège selon l'une des revendications 1 à 10, **caractérisé en ce qu'**il présente un dispositif de verrouillage (11) qui peut être commandé par l'utilisateur du siège et par lequel l'élément de table (1) peut être sélectivement verrouillé en position de rangement en opposition à l'action de l'entraînement mécanique (21) ou peut être libéré pour être transféré dans la position intermédiaire sous l'action de l'entraînement mécanique (21).
